# EUROPEAN PATENT SPECIFICATION

(11) **EP 3 771 856 B1**
(45) Date of publication and mention of the grant of the patent: **26.07.2023**
(21) Application number: 19196834.6
(22) Date of filing: 11.09.2019
(51) Int. Cl.: F16L 37/23, F16L 37/42, F16L 17/025, F16L 17/03, F16L 37/084

(54) **UNIVERSAL FEMALE CONNECTOR**
UNIVERSALBUCHSE
CONNECTEUR FEMELLE UNIVERSEL

(30) Priority: 02.08.2019 TW 108210243 U
(43) Date of publication of application: 03.02.2021
(73) Proprietor: Hui Bao Enterprise Co., Ltd., Hemei Township, Changhua County 50854 (TW)
(72) Inventor: CHEN, WAN PAO, HEMEI TOWNSHIP (TW)
(74) Representative: Cabinet Chaillot

(56) References cited:
- EP-A1- 1 422 462
- FR-A1- 2 724 710
- US-A- 5 806 832
- US-A1- 2016 169 430

## Description

### BACKGROUND OF THE INVENTION

### 1. Fields of the invention

The present invention relates to a universal female connector, and more particularly, to a universal female connector that is able to be connected with different types of male connectors.

### 2. Descriptions of Related Art

There are many types of connectors used in the industrial field about fluid, and generally include a female connector and a male connector which is connected to the female connector so as to connect two pipes through which fluid goes.

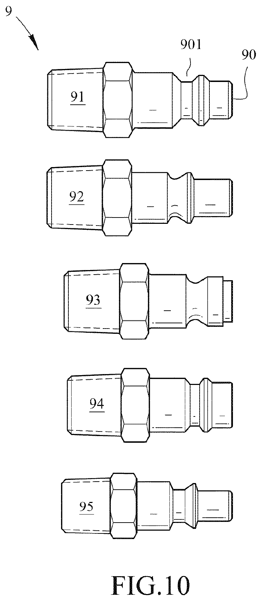

As shown in Figs. 10 which discloses existed male connectors 9, such as the Industrial male connector 91, the Aro male connector 92, the Truflate male connector 93, the Rectus male connector 94 and the Italian male connector 95. Each male connector 9 in Fig. 10 includes a groove 901. It is noted that each specific male connector 9 requires a compatible female connector so as to successfully connect two pipes. Nevertheless, different work sites may not have the required female connectors available, therefore, the users have to find suitable male connectors, and this wastes a lot of time.

US patent application US2016/169430A1, European patent application EP1422462A1, and French patent application FR2724710A1 disclose female connectors including a movable locking device and a safety device able to keep the locking device in one position when a male connector is fitted in the female connector. However, some types of male connectors cannot be connected to these existing female connectors, such that these existing female connectors are not universal.

The present invention intends to provide a universal female connector which is easily connected to different types of male connectors. Besides, the universal female connector of the present invention is safe and reliable.

### SUMMARY OF THE INVENTION

The present invention relates to a universal female connector and comprises a body having a head part and a tail part respectively connected to two ends of the body. A first path is defined axially through the head part and the body, and a second path is defined axially through the tail part. The first path communicates with the second path. The head part includes an annular recess defined in the inner periphery thereof. A hole is defined transversely through the wall of the body and communicates with the first path.

A movable unit is movably located within the first path, and includes an elongate hollow part which has a first end and a second end. The diameter of the first end of the elongate hollow part is larger than that of the second end of the elongate hollow part. A first seal is located in the elongate hollow part. Multiple beads are movably located in apertures defined through the wall of the first end of the elongate hollow part. A first engaging portion is formed on the outside of the middle portion of the elongate hollow part.

A valve unit is located in the second path of the tail part and includes a second seal, so as to prevent air in the second path from entering into the first part. A button unit is movably inserted into the hole of the body to position the elongate hollow part.

The first seal is adapted to be pushed by a male connector that is connected to the head part, when the male connector pushes the first seal, the elongate hollow part is pushed to be engaged with the button unit, and and the movable unit pushes the valve unit to communicate the first and second paths. The movable unit moves back to an initial position by pushing the button unit so as to disengage the male connector from the head part.

The movable unit includes a first spring to push the elongate hollow part back to the initial position. The valve unit includes a second spring and a valve. The second spring pushes the valve to push the second seal. The second spring also pushes the valve unit back to an initial position of the valve unit. The button unit includes a third spring which is mounted to a protrusion of the button unit so as to push the button unit back to an initial position of the button unit.

The movable unit includes a second engaging portion formed on the outside of the middle portion of the elongate hollow part.

The button unit includes a frame with an opening. The protrusion extends from one end of the frame. A first positioning face and a second positioning face are respectively formed within the opening of the frame so as to contact the first engaging portion or the second engaging portion. The first positioning face and the second positioning face are located alternatively with each other.

Each of the first and second engaging portions is a cone-shaped portion with a vertical face, such that the valve unit is opened when the vertical face of the first engaging portion is stopped at the second positioning face with the elongate hollow part positioned at a first position, and the valve unit is opened when the vertical face of the second engaging portion is stopped at the first positioning face with the elongate hollow part positioned at a second position different from the first position.

Preferably, the elongate hollow part includes a shoulder formed in the inner periphery thereof.

Preferably, the first seal includes multiple lips which flexibly extend radially from the inner periphery of the first seal.

Preferably, the body includes pressure release bore defined through the wall thereof, and the pressure release bore communicates with the first path.

The first seal of the present invention has a sealing feature when different types of male connectors are connected to the body. The male connectors can be the Industrial male connector, the Aro male connector, the Truflate male connector, the Rectus male connector and the Italian male connector.

The two engaging portions on the elongate hollow part and are located corresponding to the opening of the button unit so that when a male connector is connected to the body, the movable unit pushes the vale away and the positioning faces of the button unit are engaged with the engaging portion to position the elongate hollow part, such that the valve is kept as opened status to communicate the first path with the second path. When the button unit is pushed, the engaging portions are removed from the opening of the button unit, the elongate hollow part moves back to its initial position, and the male connector can be separated from the body, and the valve is closed.

When the male connector is separated from the body and the valve is closed, the pressurized air is released from the pressure release bore of the body to prevent from pushing the male connector to injure the users.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the universal female connector of the present invention;
Fig. 2 is an exploded view of the universal female connector of the present invention;
Fig. 3 is another exploded view of the universal female connector of the present invention;
Fig. 4 is a cross sectional view of the universal female connector of the present invention;
Fig. 5 shows that the Industrial male connector is connected to the universal female connector of the present invention;
Fig. 6 shows that the Aro male connector is connected to the universal female connector of the present invention;
Fig. 7 shows that the Truflate male connector is connected to the universal female connector of the present invention;
Fig. 8 shows that the Rectus male connector is connected to the universal female connector of the present invention;
Fig. 9 shows that the Italian male connector is connected to the universal female connector of the present invention, and
Fig. 10 discloses different conventional male connectors.

### DETAILED DESCRIPTION OF THE PREFERRED EMBODIMENT

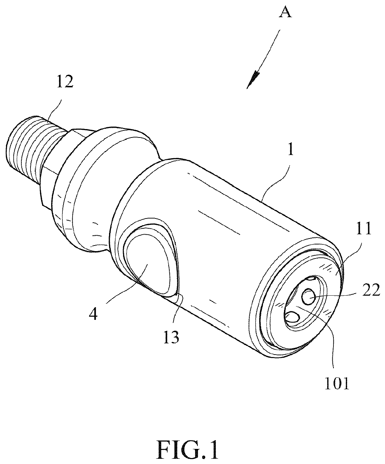

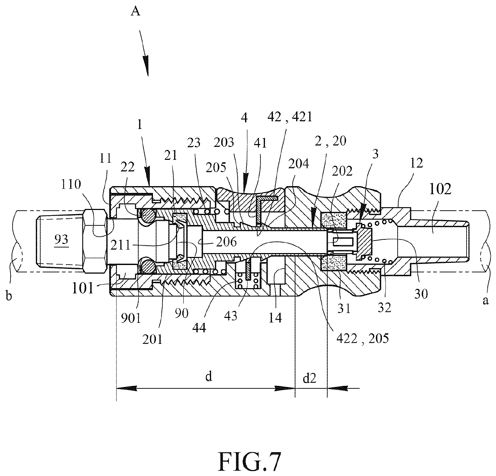

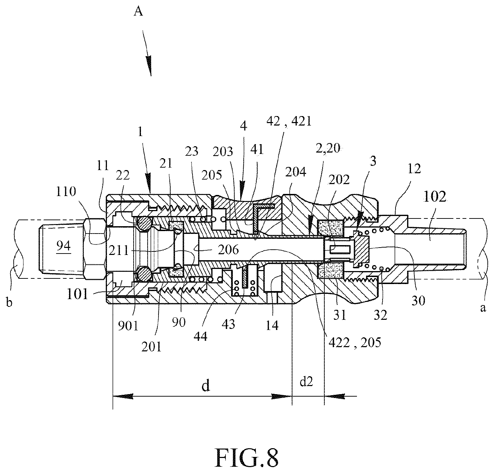

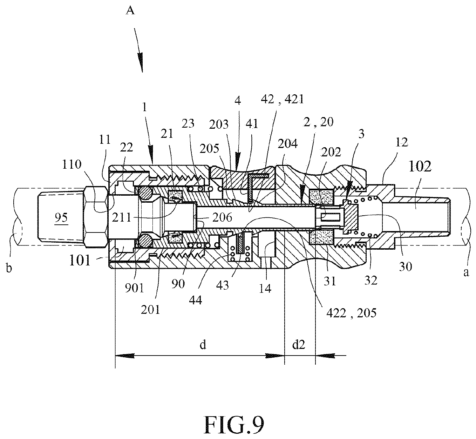

Referring to Figs. 1, 4 to 9, the universal female connector "A" of the present invention is able to be connected with the Industrial male connector 91, the Aro male connector 92, the Truflate male connector 93, the Rectus male connector 94 and the Italian male connector 95.

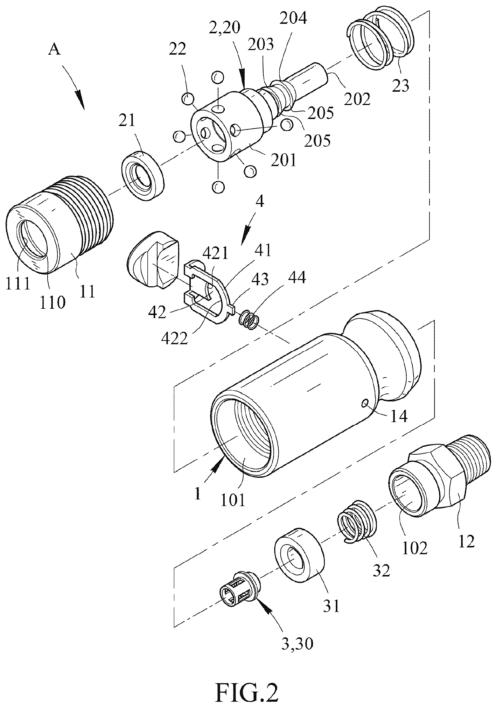

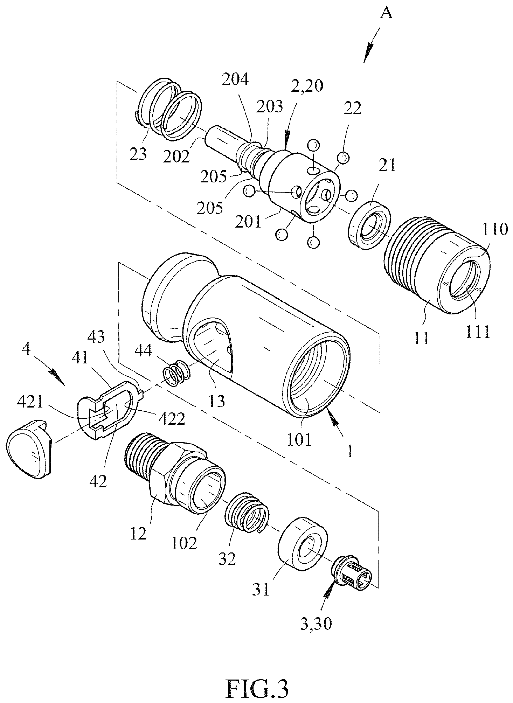

As shown in Figs. 2 to 4, the universal female connector "A" of the present invention comprises a body 1 having a head part 11 and a tail part 12 respectively connected to two ends of the body 1. A first path 101 is defined axially through the head part 11 and the body 1, and a second path 102 is defined axially through the tail part 12. The first path 101 communicates with, and shares a common axis with the second path 102. The head part 11 includes an annular recess 111 defined in the inner periphery thereof. A hole 14 defined transversely through the wall of the body 1 and communicates with the first path 101.

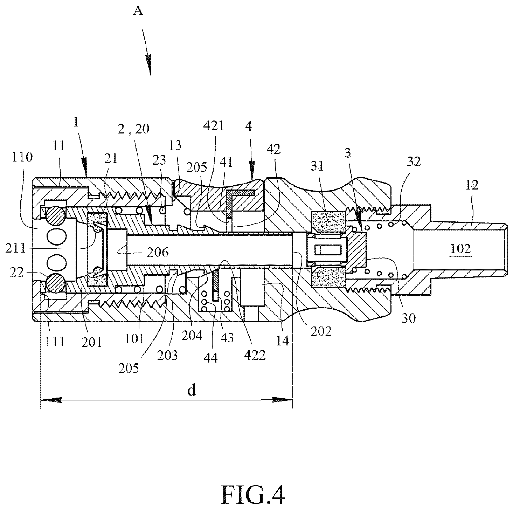

A movable unit 2 is movably located within the first path 11, and the movable unit 2 includes an elongate hollow part 20 which includes a first end 201 and a second end 202. The diameter of the first end 201 of the elongate hollow part 20 is larger than that of the second end 202 of the elongate hollow part 20. A first seal 21 is located in the elongate hollow part 20 and includes multiple lips 211 which flexibly extend radially from the inner periphery of the first seal 21. Multiple beads 22 are movably located in apertures defined through the wall of the first end 201 of the elongate hollow part 20. The beads 22 are to be engaged with the groove 901 of the male connectors 9 mentioned before. Two engaging portions are formed on the outside of the middle portion of the elongate hollow part 20. Specifically, the engaging portions are a first engaging portion 203 and a second engaging portion 204. The first and second engaging portions 203, 204 each are a cone-shaped portion. Further referring to Fig. 4, the movable unit 2 includes a first spring 23 which is biased between the first end 201 of the elongate part 20 and a fixed portion in the first path 101 so as to push the elongate hollow part 20 back to the initial position "d".

A valve unit 3 is located in the second path 102 of the tail part 12 so as to prevent the pressurized air in the second path 102 from entering into the first part 101. The valve unit 3 is also pushed by the second end 202 of the elongate hollow part 20 to open the second path 102. The valve unit 3 includes a valve 30, a second seal 31 and a second spring 32, wherein the second spring 32 provides a force to let the valve 30 to push the second seal 31 so as to close the second path 102. The second spring 32 also pushes the valve unit 3 back to the initial position of the valve unit 3.

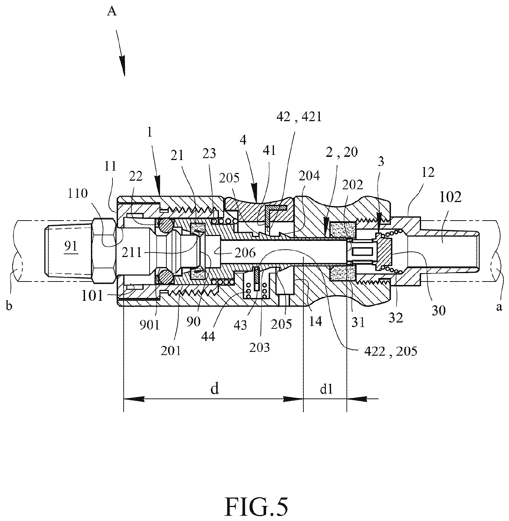

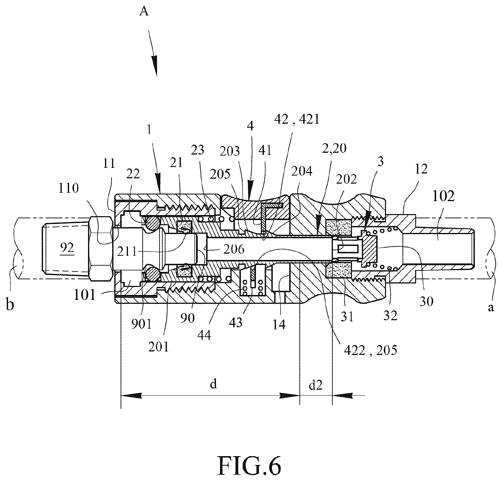

A button unit 4 is movably inserted into the hole 13 of the body 1 to position the elongate hollow part 20. The button unit 4 includes a frame 41 with an opening 42, and a protrusion 43 which extends from one end of the frame 41. The elongate hollow part 20 extends through the opening 42. The third spring 44 is mounted to the protrusion 43 of the button unit 4 so as to push the button unit 4 back to the initial position of the button unit 4. A first positioning face 421 and a second positioning face 422 are respectively formed within the opening 42 of the frame 41. The first positioning face 421 and the second positioning face 422 are located alternatively with each other. The first positioning face 421 and the second positioning face 422 contact the first engaging portion 203 or the second engaging portion 204 to position the elongate hollow part 20 ad the valve unit 3 at two positions as shown in Figs. 5 and 6.

As shown in Fig. 4 which shows the initial status of the universal female connector "A" of the present invention. The first end 201 is biased by the first spring 23 so that the first end 201 contacts the entrance 110 of the head part 11, and the beads 22 of the elongate hollow part 20 are freely movable in the annular groove 111. The valve unit 3 is pushed by the second spring 32 to close the communication between the first and second paths 101, 102, so that the pressurized air in the second path 102 cannot flow into the first path 101. The frame 41 of the button unit 4 is biased by the third spring 44, the second positioning face 422 contacts the outside the second end 202 of the elongate hollow part 20.

Fig. 5 shows that the universal female connector "A" of the present invention is to be connected with the Industrial male connector 91, and a first hose "a" is connected to the universal female connector "A". The Industrial male connector 91 is connected with a second hose "b". When the front end 90 of the Industrial male connector 91 is moved and touches the lips 211 of the first seal 21, the elongate hollow part 20 with the beads 22 are moved back, and the beads 22 are restricted by the inside of the head part 11 so that the beads 22 are engaged with the groove 901 of the Industrial male connector 91.

When the Industrial male connector 91 continuously moved, the elongate hollow part 20 with the beads 22 compress the first spring 23 to store energy. The cone-shaped first engaging portion 203 pushes the first and second positioning faces 421, 422 so that the frame 41 is moved and compresses the third spring 44 to store energy, until the vertical face 205 of the first engaging portion 203 is stopped at the second positioning face 422 of the frame 41 to position the elongate hollow part 20 at the first position "d1". The beads 22 position the Industrial male connector 91, so that the first and second hoses "a", "b" communicate with each other.

When the elongate hollow part 20 is positioned by the opening 42 of the frame 41, the second end 202 of the elongate part 20 moves the valve 30 of the valve unit 30 to form a gap between the valve 30 and the second seal 31, such that the pressurized air is allowed to flow from the first path 101 to the second path 102 via the gap. The pressurized fluid in the second path 102 flows to the first path 101 and the second hose "b". The valve 30 compresses the second spring 32 to store energy.

When the users want to close the communication between the first and second hoses "a" and "b", the button unit 4 is pushed to move the frame 41 so that the second positioning face 422 is separated from the vertical face 205 of the first engaging portion 203, and the first spring 23 pushes the elongate hollow part 20 back to the initial position "d", and the Industrial male connector 91 is separated from the universal female connector "A". The valve 30 of the valve unit 3 moves to its initial position by the second spring 32 so that there is no gap formed between the valve 30 and the second seal 31 so that the first path 101 does not communicate with the second path 102. The button unit 4 moves back to its initial position by the third spring 44.

As shown in Fig. 6, when the universal female connector "A" of the present invention is to be connected with the Aro male connector 92, the front end 90 of the Aro male connector 92 is moved and touches the lips 211 of the first seal 21, front end 90 is engaged with the shoulder 206, and the beads 22 are restricted by the inside of the head part 11 so that the beads 22 are engaged with the groove 901 of the Aro male connector 92. When the Aro male connector 92 is continuously moved, the elongate hollow part 20 with the beads 22 compress the first spring 23 to store energy. The vertical face 205 of the second engaging portion 204 is stopped at the first positioning face 421 of the frame 41 to position the elongate hollow part 20 at the second position "d2". The valve 30 is then opened and the beads 22 position the Aro male connector 92, so that the first and second hoses "a", "b" communicate with each other.

When the users want to close the communication between the first and second hoses "a" and "b", the button unit 4 is pushed to move the frame 41 so that the first positioning face 421 is separated from the vertical face 205 of the second engaging portion 204, and the first spring 23 pushes the elongate hollow part 20 back to the initial position "d", and the Aro male connector 92 is separated from the universal female connector "A". The valve is closed and no gap is formed so that the first path 101 does not communicate with the second path 102.

Figs. 6, 7, 8 and 9 show the universal female connector "A" is connected with the Truflate male connector 93, the Rectus male connector 94, the Italian male connector 95, the steps are the same as the description regarding the connection between the Aro male connector 92 with the universal female connector 92. However, the front end 90 of the Truflate male connector 93 and the Rectus male connector 94 is not engaged with the shoulder 206.

As shown in Fig. 5, the valve 30 can be opened, when the Aro male connector 92, the Truflate male connector 93, the Rectus male connector 94, and the Italian male connector 95 are positioned at the second position "d2" by the button unit 4. The vertical face 205 of the second engaging portion 204 is stopped at the first positioning face 421 of the frame 41 so as to position the elongate hollow part 20 at the second position "d2". Differently, for the Industrial male connector 91, the valve 30 can be opened when the vertical face 205 of the first engaging portion 203 is stopped at the second positioning face 422 of the frame 41 so as to position the elongate hollow part 20 at the first position "d1".

While we have shown and described the embodiment in accordance with the present invention, it should be clear to those skilled in the art that further embodiments may be made without departing from the scope of the present invention.

## Claims

1. A universal female connector (A) comprising:
a body (1) having a head part (11) and a tail part (12) respectively connected to two ends of the body (1), a first path (101) defined axially through the head part (11) and the body (1), a second path (102) defined axially through the tail part (12), the first path (101) communicating with the second path (102), the head part (11) including an annular recess (111) defined in an inner periphery thereof, a hole (13) defined transversely through a wall of the body (1) and communicating with the first path (101);
a movable unit (2) movably located within the first path (101), the movable unit (2) being an elongate hollow part (20) and including a first end (201) and a second end (202), a diameter of the first end (201) of the elongate hollow part (20) being larger than that of the second end (202) of the elongate hollow part (20), a first seal (21) located in the elongate hollow part (20), multiple beads (22) movably located in apertures defined through a wall of the first end (201) of the elongate hollow part (20), a first engaging portion (203) formed on an outside of a middle portion of the elongate hollow part (20);
a valve unit (3) located in the second path (102) of the tail part (12) and including a second seal (31), the valve unit (3) adapted to prevent air in the second path (102) from entering into the first part (101), and
a button unit (4) movably inserted into the hole (13) of the body (1) to position the elongate hollow part (20),
wherein the first seal (21) is adapted to be pushed by a male connector connected to the head part (11), the elongate hollow part (20) is moved to be engaged with the button unit (4) and the movable unit (2) pushes the valve unit (3) to communicate the first and second paths (101 ; 102), the movable unit (2) moves back to an initial position (d) by pushing the button unit (4) so as to disengage the male connector from the head part (11),
wherein the movable unit (2) includes a first spring (23) to push the elongate hollow part (20) back to the initial position, the valve unit (3) includes a second spring (32), the second spring (32) pushes a second seal(31), the second spring (32) pushes the valve unit (2) back to an initial position of the valve unit(3), the button unit (4) includes a third spring (44) which is mounted to a protrusion (43) of the button unit (4) so as to push the button unit (4) back to an initial position of the button unit (4),
wherein the movable unit (2) includes a second engaging portion (204) formed on the outside of the middle portion of the elongate hollow part (20), wherein the button unit (4) includes a frame (41) with an opening (42), the protrusion (43) extends from one end of the frame (41), a first positioning face (421) and a second positioning face (422) are respectively formed within the opening (42) of the frame (41) so as to contact the first engaging portion (203) or the second engaging portion (204), the first positioning face (421) and the second positioning face (422) are located alternatively with each other,
wherein each of the first and second engaging portions (203 ; 204) is a cone-shaped portion with a vertical face (205), such that the valve unit (3) is opened when the vertical face (205) of the first engaging portion (203) is stopped at the second positioning face (422) with the elongate hollow part (20) positioned at a first position (d1), and the valve unit (3) is opened when the vertical face (205) of the second engaging portion (204) is stopped at the first positioning face (421) with the elongate hollow part (20) positioned at a second position (d2) different from the first position (d1).

2. The universal female connector (A) as claimed in claim 1, wherein the elongate hollow part (20) includes a shoulder (206) formed in an inner periphery thereof.

3. The universal female connector (A) as claimed in claim 1, wherein the first seal (21) includes multiple lips (211) which flexibly extend radially from an inner periphery of the first seal (21).

4. The universal female connector (A) as claimed in claim 1, wherein the body (1) includes pressure release bore (14) defined through the wall thereof, the pressure release bore (14) communicates with the first path (101).

## Patentansprüche

1. - Universalbuchse (A), umfassend:
einen Körper (1) mit einem vorderen Teil (11) und einem hinteren Teil (12), die jeweils mit zwei Enden des Körpers (1) verbunden sind, einem ersten Pfad (101), der axial durch den vorderen Teil (11) und den Körper (1) definiert ist, einen zweiten Pfad (102), der axial durch den hinteren Teil (12) definiert ist, wobei der erste Pfad (101) mit dem zweiten Pfad (102) kommuniziert, wobei der vordere Teil (11) eine ringförmige Aussparung (111) beinhaltet, die in einem inneren Umfang davon definiert ist, ein Loch (13), das quer durch eine Wand des Körpers (1) definiert ist und mit dem ersten Pfad (101) kommuniziert;
eine bewegliche Einheit (2), die beweglich innerhalb des ersten Pfads (101) angeordnet ist, wobei die bewegliche Einheit (2) ein verlängerter hohler Teil (20) ist und ein erstes Ende (201) und ein zweites Ende (202) beinhaltet, wobei ein Durchmesser des ersten Endes (201) des verlängerten hohlen Teils (20) grösser als derjenige des zweiten Teils (202) des verlängerten hohlen Teils (20) ist, eine erste Dichtung (21), die sich im verlängerten hohlen Teil (20) befindet, zahlreiche Kügelchen (22), die sich beweglich in Öffnungen befinden, die durch eine Wand des ersten Endes (201) des verlängerten hohlen Teils (20) definiert sind, einen ersten Eingriffsabschnitt (203), der auf einer Außenseite eines mittleren Abschnitts des verlängerten hohlen Teils (20) gebildet ist;
eine Ventileinheit (3), die sich im zweiten Pfad (102) des hinteren Teils (12) befindet und eine zweite Dichtung (31) beinhaltet, die Ventileinheit (3) ausgelegt ist, um zu verhindern, dass Luft im zweiten Pfad (102) in den ersten Teil (101) eintritt, und
eine Knopfeinheit (4), die beweglich in das erste Loch (13) des Körpers (1) eingeführt ist, um den verlängerten hohlen Teil (20) zu positionieren,
wobei die erste Dichtung (21) ausgelegt ist, um von einem Stecker geschoben zu werden, der mit dem vorderen Teil (11) verbunden ist, der verlängerte hohle Teil (20) bewegt wird, um mit der Knopfeinheit (4) eingegriffen zu sein, und die bewegliche Einheit (2) die Ventileinheit (3) schiebt, um den ersten Pfad und den zweiten Pfad (101; 102) miteinander in Kommunikation zu bringen, sich die bewegliche Einheit (2) zurück in eine anfängliche Position (d) bewegt, indem sie die Knopfeinheit (4) schiebt, um den Stecker vom vorderen Teil (11) zu lösen,
wobei die bewegliche Einheit (2) eine erste Feder (23) beinhaltet, um den verlängerten hohlen Teil (20) zurück in die anfängliche Position zu schieben, die Ventileinheit (3) eine zweite Feder (32) beinhaltet, die zweite Feder (32) eine zweite Dichtung (31) schiebt, die zweite Feder (32) die Ventileinheit (2) zurück in eine anfängliche Position der Ventileinheit (3) schiebt, die Knopfeinheit (4) eine dritte Feder (44) beinhaltet, die auf einen Vorsprung (43) der Knopfeinheit (4) montiert ist, um die Knopfeinheit (4) zurück in eine anfängliche Position der Knopfeinheit (4) zu schieben,
wobei die bewegliche Einheit (2) einen zweiten Eingriffsabschnitt (204) beinhaltet, der auf der Außenseite eines mittleren Abschnitts des verlängerten hohlen Teils (20) gebildet ist,
wobei die Knopfeinheit (4) einen Rahmen (41) mit einer Öffnung (42) beinhaltet, sich der Vorsprung (43) von einem Ende des Rahmens (41) erstreckt, eine erste Positionierungsfläche (421) und eine zweite Positionierungsfläche (422) jeweils innerhalb der Öffnung (42) des Rahmens (41) gebildet sind, um mit dem ersten Eingriffsabschnitt (203) oder dem zweiten Eingriffsabschnitt (204) in Kontakt zu kommen, sich die erste Positionierungsfläche (421) und die zweite Positionierungsfläche (422) abwechselnd zueinander befinden,
wobei jeder des ersten und zweiten Eingriffsabschnitts (203; 204) ein kegelförmiger Abschnitt mit einer vertikalen Fläche (205) ist, so dass die Ventileinheit (3) geöffnet ist, wenn die vertikale Fläche (205) des ersten Eingriffsabschnitts (203) an der zweiten Positionierungsfläche (422) gestoppt wird, wobei der verlängerte hohle Teil (20) an einer ersten Position (d1) positioniert ist, und die Ventileinheit (3) geöffnet ist, wenn die vertikale Fläche (205) des zweiten Eingriffsabschnitts (204) an der ersten Positionierungsfläche (421) gestoppt wird, wobei der verlängerte hohle Teil (20), der an einer zweiten Position (d2) positioniert ist, verschieden von der ersten Position (d1) ist.

2. - Universalbuchse (A) nach Anspruch 1, wobei der verlängerte hohle Teil (20) einen Absatz (206) beinhaltet, die in einem inneren Umfang davon gebildet ist.

3. - Universalbuchse (A) nach Anspruch 1, wobei die erste Dichtung (21) zahlreiche Lippen (211) beinhaltet, die sich flexibel radial von einem inneren Umfang der ersten Dichtung (21) erstrecken.

4. - Universalbuchse (A) nach Anspruch 1, wobei der Körper (1) eine Druckentlastungsbohrung (14) beinhaltet, die durch die Wand davon definiert ist, wobei die Druckentlastungsbohrung (14) mit dem ersten Pfad (101) in Kommunikation ist.

## Revendications

1. - Connecteur femelle universel (A) comprenant :
un corps (1) ayant une partie tête (11) et une partie queue (12) respectivement reliées à deux extrémités du corps (1), un premier trajet (101) défini axialement à travers la partie tête (11) et le corps (1), un second trajet (102) défini axialement à travers la partie queue (12), le premier trajet (101) communiquant avec le second trajet (102), la partie tête (11) comprenant un renfoncement annulaire (111) défini sur une périphérie intérieure de celle-ci, un trou (13) défini transversalement à travers une paroi du corps (1) et communiquant avec le premier trajet (101) ;
une unité mobile (2) située de manière mobile à l'intérieur du premier trajet (101), l'unité mobile (2) étant une partie creuse allongée (20) et comprenant une première extrémité (201) et une seconde extrémité (202), un diamètre de la première extrémité (201) de la partie creuse allongée (20) étant plus grand que celui de la seconde extrémité (202) de la partie creuse allongée (20), un premier joint (21) situé dans la partie creuse allongée (20), de multiples billes (22) situées de manière mobile dans des ouvertures définies à travers une paroi de la première extrémité (201) de la partie creuse allongée (20), une première partie d'engagement (203) formée sur un extérieur d'une partie centrale de la partie creuse allongée (20) ;
une unité soupape (3) située dans le second trajet (102) de la partie queue (12) et comprenant un second joint (31), l'unité soupape (3) étant agencée pour empêcher de l'air dans le second trajet (102) d'entrer dans la première partie (101), et
une unité bouton (4) introduite de manière mobile dans le trou (13) du corps (1) pour positionner la partie creuse allongée (20),
le premier joint (21) étant agencé pour être poussé par un connecteur mâle relié à la partie tête (11), la partie creuse allongée (20) étant déplacée pour être engagée avec l'unité bouton (4), et l'unité mobile (2) poussant l'unité soupape (3) pour faire communiquer les premier et second trajets (101 ; 102), l'unité mobile (2) revenant à une position initiale (d) par poussée de l'unité bouton (4) de façon à désengager le connecteur mâle vis-à-vis de la partie tête (11),
l'unité mobile (2) comprenant un premier ressort (23) pour repousser la partie creuse allongée (20) jusqu'à la position initiale, l'unité soupape (3) comprenant un deuxième ressort (32), le deuxième ressort (32) poussant un second joint (31), le deuxième ressort (32) repoussant l'unité soupape (2) jusqu'à une position initiale de l'unité soupape (3), l'unité bouton (4) comprenant un troisième ressort (44) qui est monté sur une saillie (43) de l'unité bouton (4) de façon à repousser l'unité bouton (4) jusqu'à une position initiale de l'unité bouton (4),
l'unité mobile (2) comprenant une seconde partie d'engagement (204) formée sur l'extérieur de la partie centrale de la partie creuse allongée (20),
l'unité bouton (4) comprenant un châssis (41) avec une ouverture (42), la saillie (43) s'étendant à partir d'une extrémité du châssis (41), une première face de positionnement (421) et une seconde face de positionnement (422) étant respectivement formées dans l'ouverture (42) du châssis (41) de façon à entrer en contact avec la première partie d'engagement (203) ou la seconde partie d'engagement (204), la première face de positionnement (421) et la seconde face de positionnement (422) étant situées alternativement l'une par rapport à l'autre,
chacune des première et seconde parties d'engagement (203 ; 204) étant une partie en forme de cône avec une face verticale (205), de telle sorte que l'unité soupape (3) est ouverte lorsque la face verticale (205) de la première partie d'engagement (203) est arrêtée à la seconde face de positionnement (422) avec la partie creuse allongée (20) positionnée à une première position (d1), et que l'unité soupape (3) est ouverte lorsque la face verticale (205) de la seconde partie d'engagement (204) est arrêtée à la première face de positionnement (421) avec la partie creuse allongée (20) positionnée à une seconde position (d2) différente de la première position (d1).

2. - Connecteur femelle universel (A) selon la revendication 1, dans lequel la partie creuse allongée (20) comprend un épaulement (206) formé sur une périphérie intérieure de celle-ci.

3. - Connecteur femelle universel (A) selon la revendication 1, dans lequel le premier joint (21) comprend de multiples lèvres (211) qui s'étendent radialement de manière flexible à partir d'une périphérie intérieure du premier joint (21).

4. - Connecteur femelle universel (A) selon la revendication 1, dans lequel le corps (1) comprend un orifice de décharge (14) défini à travers la paroi de celui-ci, l'orifice de décharge (14) communiquant avec le premier trajet (101).
